# EUROPÄISCHE PATENTSCHRIFT

(11) **EP 1 693 610 B1**
(45) Veröffentlichungstag und Bekanntmachung des Hinweises auf die Patenterteilung: **13.09.2017**
(21) Anmeldenummer: 06000156.7
(22) Anmeldetag: 05.01.2006
(51) Int. Cl.: F16N 9/04, F16N 13/18

(54) **Selbsttätige Schmiereinrichtung**
Automatic lubrication system
Dispositif automatique de lubrification

(30) Priorität: 19.02.2005 DE 202005002671 U
(43) Veröffentlichungstag der Anmeldung: 23.08.2006
(73) Patentinhaber: SKF Lubrication Systems Germany GmbH, 69190 Walldorf (DE)
(72) Erfinder: Schönfeld, Andreas, 68789 St. Leon-Rot (DE)
(74) Vertreter: Keil & Schaafhausen Patent- und Rechtsanwälte PartGmbB

(56) Entgegenhaltungen:
- US-A- 2 137 108
- US-A- 2 382 426
- US-A- 3 461 990

## Beschreibung

Die Erfindung bezieht sich auf eine selbsttätige Schmiereinrichtung an einer zu schmierenden Vorrichtung, z. B. an einem Bearbeitungswerkzeug, mit einem Pumpenelement zur Förderung von Schmierstoff, z.B. Schmierfett, aus einem Vorratsbehälter zu mindestens einer mit Schmierstoff zu versorgenden Schmierstelle der Vorrichtung, sowie mit Mitteln zum Erzeugen eines Pumpenhubes des Pumpenelements, wobei ein beim Betreiben der Vorrichtung beweglicher Teil, wie ein Arm, ein Hebel, ein Nocken oder ein Exzenter, mit dem Förderkolben des Pumpenelements zusammen wirkt.

Aus der DE 201 18 920 U ist eine derartige Schmiereinrichtung bekannt, bei welcher ein Exzenter, dessen Exzenterfläche mit dem Förderkolben des Pumpenelements zusammen wirkt, über einen Freilauf auf einem Wellenkörper gelagert ist und bei welcher der Antrieb des Exzenters über das freie Ende eines der Schaltkolben eines Progressivverteilers erfolgt, welcher in einer das Werkzeug überbrückenden Bypassleitung der Hydraulik-Druckleitung für die Betätigung des Werkzeugs liegt.

Bei einer ähnlichen selbsttätigen Schmiereinrichtung gemäß DE 202 06 050 U wirkt der Förderkolben des Pumpenelements mit einem mit einem Schlagwerk bewegten, vorzugsweise mit diesem verbundenen Betätigungsarm zusammen.

Aus der DE 198 03 131 A1 ist eine Kettenmediumpumpe für eine Motorkettensäge bekannt, welche das Kettenmedium über eine Saugleitung aus einem Tank ansaugt und über eine Druckleitung zu einer Sägevorrichtung der Motorsäge befördert, bei welcher zum Abschalten der Versorgung der Sägevorrichtung mit dem Kettenmedium steuerbare Mittel vorhanden sind, mittels derer bei laufender Kettenmediumpumpe die Druckleitung unterbrochen und gleichzeitig das von der Kettenmediumpumpe geförderte Kettenmedium in die Ansaugleitung zurück geleitet werden kann. Die Motorsäge kann eine Sicherheitstaste umfassen, mittels derer bei laufendem Motor die Kettenmediumförderung aktivierbar und deaktivierbar ist, wobei die Sicherheitstaste und die steuerbaren Mittel bzw. das Umsteuerventil über Betätigungsmittel derart in Wirkverbindung stehen, dass beim Loslassen der Sicherheitstaste die Druckleitung selbsttätig unterbrochen und beim Betätigen der Sicherheitstaste die Unterbrechung der Druckleitung selbsttätig aufgehoben wird, wobei die Betätigungsmittel einen Bowdenzug umfassen können.

Aus der EP 0 395 341 ist eine Schmiereinrichtung, insbesondere für mit niedrigem Hub arbeitende Mechanismen bekannt, welche ein Schmierstoffvorrat und eine Pumpe aufweist, welche mit dem Mechanismus gemeinsam bewegbar ist. Bei jedem Hub des Mechanismus wird die Pumpe durch Niederdrücken eines Tauchkolbens betätigt, um den Mechanismus mit einer Schmierstoffmenge zu versorgen, welche beim Betrieb des Mechanismus verbraucht wird.

Aus der Druckschrift US 2,317,108 ist eine Schmiereinrichtung bekannt, bei der mittels eines rotierenden Nockens in regelmäßigen Abständen ein Flansch berührt wird, so dass eine Hülse gegen die Kraft einer Feder verschoben wird. Durch die Bewegung der Hülse wird eine weitere Feder komprimiert und hierdurch ein Kolben verschoben, welche Bewegung bewirkt, dass Schmieröl von einem Speicher in eine Bohrung transportiert wird. Eine weitere Schmiereinrichtung mit einem Kolben, der fest mit einer Hülse verbunden ist, wird in der Druckschrift US 2,382,426 offenbart.

Schließlich wird in der Druckschrift US 3,461,990 ein Schmiersystem beschrieben, dessen Betätigungselement zur Betätigung einer Pumpe in Abhängigkeit von den Bewegungen eines Fahrzeugs oder eines Fahrzeugteils beweglich ist.

Bei allen bekannten selbsttätigen Schmiereinrichtungen ist die räumliche Zuordnung unmittelbar an der zu schmierenden Vorrichtung konstruktiv festgelegt.

Aufgabe der vorliegenden Erfindung ist es, eine selbsttätige Schmiereinrichtung der eingangs genannten Art vorzuschlagen, bei welcher Pumpenelement und beweglicher Teil der zu schmierenden Vorrichtung, welcher der Betätigung der Schmiereinrichtung dient, in unterschiedlicher räumlicher Beziehung zueinander angeordnet sein können.

Diese Aufgabe wird bspw. im Wesentlichen dadurch gelöst, dass ein von dem beweglichen Teil der Vorrichtung betätigbarer Taster mit einem axial hin und her verschiebbaren Stößel vorgesehen ist, welcher mittels eines Bowdenzugs oder dgl. flexiblen Verbindung mit dem Förderkolben des Pumpenelements verbunden ist, wobei der Förderkolben mittels Federkraft in Richtung seiner Druckposition und der Stößel des Tasters mittels Federkraft funktionell in entgegengesetzter Richtung zu der des Förderkolbens vorgespannt sind und wobei die auf den Stößel wirkende Federkraft größer ist als die auf dem Förderkolben wirkende Federkraft.

Hierdurch können auf einfache Weise Taster und Pumpenelement weitgehend räumlich unabhängig voneinander angeordnet sein, so dass die erfundene Schmiereinrichtung variabel eingesetzt werden kann. Taster und Pumpenelement sind über einen Bowdenzug oder dgl. flexiblen Verbindung miteinander verbunden. Der Förderkolben des Pumpenelements wird mit einer Druckfeder in die Druckposition gedrückt, während eine Rückstellfeder in dem Taster in Gegenrichtung wirkt und damit den Förderkolben zurück in seine Ansaugposition zieht. Der Taster wird mit dem beweglichen Teil der zu schmierenden Vorrichtung hin und her geschoben. Wird die Rückstellfeder des Tasters durch diese Bewegung gedrückt, entlastet sie die Druckfeder in dem Pumpenelement und der Förderkolben wird durch die letzte in die Druckposition geschoben. Bei der Bewegung des Stößel des Tasters in Gegenrichtung wird der Förderkolben des Pumpenelements durch die Wirkung der stärkeren Rückstellfeder des Tasters über den Bowdenzug oder dgl. flexible Verbindung in die Ansaugposition gebracht.

In besonderer konstruktiver Ausgestaltung dieses Erfindungsgedankens kann der Förderkoben unter der Wirkung einer z.B. als den Förderkolben wenigstens teilweise umschließenden Schraubenlinienfeder ausgebildeten Druckfeder in Richtung seiner Druckposition vorgespannt und der Stößel unter der Wirkung einer z.B. als den Stößel wenigstens teilweise umschließenden Schraubenlinienfeder ausgebildeten Rückstellfeder bei Nichtbetätigung des Tasters funktionell in Gegenrichtung, also in Richtung seiner Ansaugposition weg von dem Förderkolben, gedrückt und dadurch wegen der größeren Rückstellkraft der Rückstellfeder gegenüber derjenigen der Druckfeder des Förderkolbens in seine Ansaugstellung mitgenommen werden.

Des Weiteren ist es konstruktiv von Vorteil, wenn bei Betätigung des Tasters durch Verschieben des Stößels aus seiner Ansaugposition funktionell in Richtung des Förderkolbens der Förderkolben aus seiner Ansaugposition unter der Wirkung der Druckfeder in Richtung seiner Druckposition verschoben wird.

Besonders einfach ist die Schmiereinrichtung dann, wenn ein den Bowdenzug bildendes Seil mit seinem einen Ende in einem zentrischen, z.B. als Sacklochbohrung ausgebildeten Einspannlängskanal des Stößels und mit seinem anderen Ende in einem zentrischen, z.B. als Sacklochbohrung ausgebildeten Einspannlängskanal des Förderkolbens aufgenommen und festgespannt ist. Auf diese Weise kann der Bowdenzug einfach montiert und bei Defekt einfach ausgetauscht werden.

Zur Zuverlässigkeit der Funktion der erfundenen Schmiereinrichtung trägt es bei, wenn die endgültige Saugposition des Stößels durch einen z.B. von einem den Stößel aufnehmenden Tastergehäuse gebildeten Anschlag bestimmt ist.

Ein weiteres fakultatives Konstruktionsmerkmal der Schmiereinrichtung, welches den Zusammenbau der Schmiereinrichtung und seine Wartung erleichtert, besteht darin, dass sich die Rückstellfeder für den Stößel an einem dem aus dem Tastergehäuse herausragenden Stößelende gegenüber liegenden Stößelende gegen ein von einem Verschlussstopfen des Tastergehäuses gebildeten Gegenlager abstützt.

Zur sicheren Funktion der Schmiereinrichtung trägt es auch bei, wenn das der Druckfeder gegenüber liegende Förderkolbenende in einem Führungskanal eines Pumpenkörpers abgedichtet geführt ist.

Sowohl Ansaugöffnung als auch Abgabeöffnung des Pumpenkörpers sind vorzugsweise je mit einem Rückschlagventil versehen.

Das den Bowdenzug bildende Seil kann durch einen ein Pumpengehäuse auf der dem Pumpenkörper gegenüber liegenden Seite verschließenden und ein Gegenlager für die Druckfeder bildenden Verschlussstopfen geführt sein.

Weitere Ziele, Merkmale, Vorteile und Anwendungsmöglichkeiten der Erfindung ergeben sich aus der nachfolgenden Beschreibung von Ausführungsbeispielen an Hand der Zeichnung. Dabei bilden alle beschriebenen und/oder bildlich dargestellten Merkmale für sich oder in beliebiger Kombination den Gegenstand der Erfindung, auch unabhängig von deren Zusammenfassung in einzelnen Ansprüchen oder deren Rückbeziehung.

Es zeigen:
- Fig. 1: eine Zusammenstellungszeichnung von Pumpenelement und Taster bei einer erfindungsgemäßen Schmiereinrichtung,
- Fig. 2: im Längsschnitt ein bei der selbsttätigen Schmiereinrichtung vorzugsweise eingesetztes Pumpenelement, und
- Fig. 3: im Längsschnitt einen bei der Erfindung vorzugsweise eingesetzten Taster.

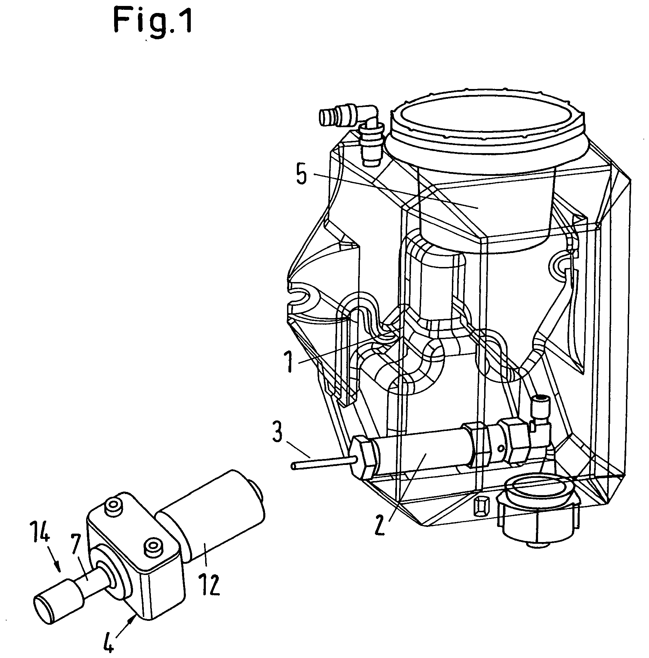

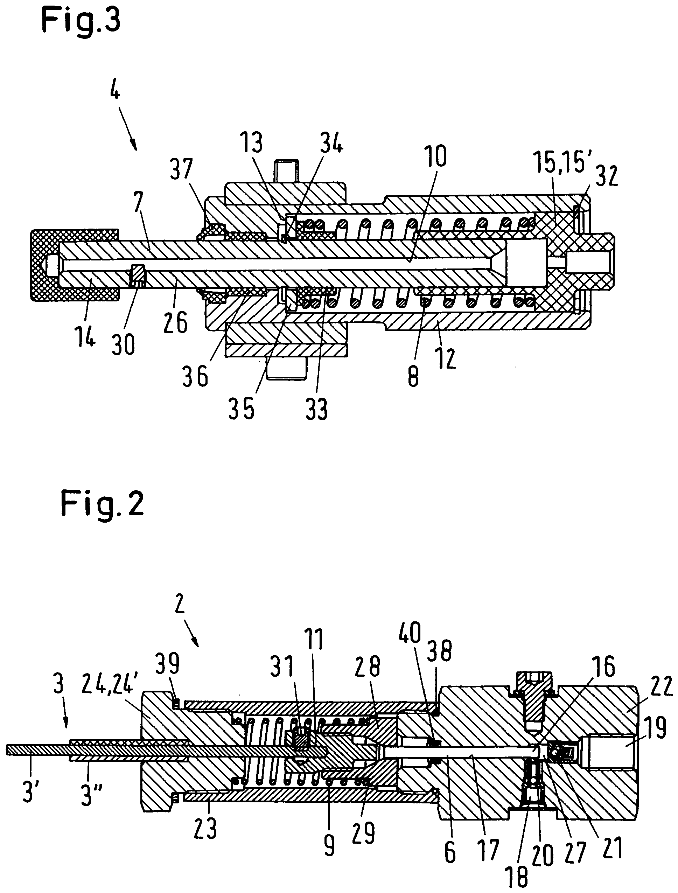

Gemäß Fig. 1 weist die erfindungsgemäße selbsttätige Schmiereinrichtung ein Pumpenelement 2 und einen Taster 4 auf, welche über einen Bowdenzug 3 oder dgl. flexible Zugverbindung miteinander verbunden sind, wobei die Funktionsweise der Verbindung im Zusammenhang mit den Fig. 2 und 3 näher erläutert wird.

Das Pumpenelement 2 dient dazu, Schmiermittel, bspw. Schmierfett, aus einem mit einem Sieb 5 ausgestatteten Vorratsbehälter 1 bestimmten Schmierstellen einer zu schmierenden Vorrichtung, z. B. an einem Bearbeitungswerkzeug oder dgl. Mechanismus, während des Betriebs der zu schmierenden Vorrichtung zuzuführen.

Dabei wirkt die zu schmierende Vorrichtung mit einem beweglichen Teil, wie einem Arm, einem Hebel, einem Nocken oder einem Exzenter, auf das aus dem Tastergehäuse 12 herausragende Stößelende 14 eines Stößels 7 ein, um diesen gegen die Wirkung einer Rückstellfeder 8 aus der in Fig. 3 dargestellten Ansaugposition um einen vorgegebenen Hub funktionell in Richtung eines Förderkolbens 6 in dem Pumpenelement 2 zu verschieben, so dass dieser mittels einer Druckfeder 9 in die in Fig. 2 dargestellte Druckposition verschoben werden kann.

Entsprechend den Fig. 2 und 3 ist der Stößel 7 des Tasters 4 mittels des Bowdenzugs 3 mit dem Förderkolben 6 verbunden. Der Förderkolben 6 ist mittels Federkraft in Richtung seiner Druckposition und der Stößel 7 des Tasters 4 mittels Federkraft funktionell in entgegen gesetzter Richtung zu der des Förderkolbens 6 vorgespannt. Dabei ist die auf den Stößel 7 wirkende Federkraft größer als die auf den Förderkolben 6 wirkende Federkraft, so dass bei Nichtbetätigung des Stößels 7 dieser mittels der Rückstellfeder 8 in die in Fig. 3 dargestellte Ansaugposition und damit der Förderkolben 6 des Pumpenelements 2 aus der in Fig. 2 dargestellten Druckposition gegen die Wirkung der Druckfeder 9 in der Zeichnung nach links um einen vorgegebenen Hub in dessen Ansaugposition mitgenommen wird. Hierbei wird neuer Schmierstoff über ein Rückschlagventil 20 in der Ansaugöffnung 18 des Pumpenkörpers 22 in die vor der Stirnfläche des Förderkolbens 6 liegende Schmierstoffkammer 27 gesaugt. Bei anschließender Betätigung des Stößels 7, also bei einem Verschieben des Stößels 7 aus der in Fig. 3 dargestellten Ansaugposition in Richtung des Inneren des Tastergehäuses 12, erlaubt die Druckfeder 9 in dem Pumpengehäuse 23 ein Verschieben des Förderkolbens 6 in der Zeichnung nach rechts in dessen Druckposition, wobei der in der Schmierstoffkammer 27 aufgenommene Schmierstoffanteil über ein Rückschlagventil 21 in eine Abgabeöffnung 19 des Pumpenkörpers 22 in Richtung der Schmierstelle der zu schmierenden Vorrichtung abgegeben wird.

Zur Sicherung einer kompakten Bauweise umgibt die als Schraubenlinienfeder ausgebildete Druckfeder 9 des Pumpenelements 2 den Förderkolben 6 im Bereich eines hinteren Mitnehmerkörpers 28 wenigstens teilweise, wobei sich die Druckfeder 9 einerseits an einem als in das freie Ende des rohrförmigen Pumpengehäuses 23 eingeschraubter Verschlussstopfen 24 ausgebildetes Gegenlager 24' und andererseits an einer Schulter 29 des Mitnehmerkörpers 28 abstützt.

Das den Bowdenzug 3 bildende Seil 3' ist mit seinem einen Ende in einem zentrischen, als Sacklochbohrung ausgebildeten Einspannlängskanal 10 des Stößels 7 aufnehmbar und dort mittels Gewindestift 30 festspannbar, während das andere Ende des Seils 3' in einem zentrischen, als Sacklochbohrung ausgebildeten Einspannlängskanal 11 des Förderkolbens 6 aufgenommen und mittels Gewindestift 31 festgespannt ist. Dabei wird das Seil 3' pumpenelementseitig durch eine flexible Hülle 3" des Verschlussstopfens 24 des Pumpengehäuses 23 in das Gehäuseinnere geführt, während des tasterseitige Ende ebenfalls durch eine entsprechende (nicht dargestellte) flexible Hülle in dem Verschlussstopfen 15 des Tastergehäuses 12 in das Innere des Tastergehäuses 12 führbar ist. Der Verschlusssstopfen 15 ist mittels Sicherungsring 32 in dem einen Ende des rohrförmigen Tastergehäuses 12 gehalten und bildet ein Gegenlager 15' für das eine Ende der Rückstellfeder 8. Das andere Ende der Rückstellfeder 8 stützt sich an einem den Stößel 7 umgebenden Gleitlager 33 ab, welches sich seinerseits auf einer mittels Sicherungsring 34 gegen axiales Verschieben gesicherten Ringscheibe 35 abstützt. Der Stößel 7 ist im Endbereich des Tastergehäuses 12 in einem Gleitlager 36 geführt und mit einem Abstreifer 37 versehen.

Wie aus Fig. 2 ersichtlich ist, wird das Pumpenelement 2, abgesehen von dem Förderkolben 6 mit der Druckfeder 9, von einem bis auf die Durchgangsbohrungen im Wesentlichen massiven Pumpenkörper 22 und dem rohrförmigen Pumpengehäuse 23 mit dem Verschlussstopfen 24 gebildet. Pumpenkörper 22, Pumpengehäuse 23 und Verschlussstopfen 24 können mit entsprechenden Dichtringen 38, 39 gegeneinander abgedichtet sein. Ebenso ist der Führungskolben 6 mittels eines in den Pumpenkörper 22 eingelassenen Dichtring 40 gegen den Pumpenkörper 22 abgedichtet, wobei die axiale Lage des Dichtringes 40 mittels eines Zackenrings 41 gesichert ist.

### Bezugszeichenliste:

- 1: Vorratsbehälter
- 2: Pumpenelement
- 3,3', 3": Bowdenzug, Seil, Hülle
- 4: Taster
- 5: Sieb
- 6: Förderkolben
- 7: Stößel
- 8: Rückstellfeder (für den Stößel)
- 9: Druckfeder (für den Förderkolben)
- 10: Einspannlängskanal (Stößel)
- 11: Einspannlängskanal (Förderkolben)
- 12: Tastergehäuse
- 13: Anschlag (für Stößel)
- 14: äußeres Stößelende
- 15, 15': Verschlussstopfen, Gegenlager (Taster)
- 16: Förderkolbenende
- 17: Führungskanal
- 18: Ansaugöffnung
- 19: Abgabeöffnung
- 20: Rückschlagventil (Ansaugöffnung)
- 21: Rückschlagventil (Abgabeöffnung)
- 22: Pumpenkörper
- 23: Pumpengehäuse
- 24,24': Verschlussstopfen, Gegenlager (Pumpenelement)
- 25: inneres Stößelende
- 26: herausragendes Stößelende
- 27: Schmierstoffkammer
- 28: Mitnehmerkörper
- 29: Schulter
- 30: Gewindestift
- 31: Gewindestift
- 32: Sicherungsring
- 33: Gleitlager
- 34: Sicherungsring
- 35: Ringscheibe
- 36: Gleitlager
- 37: Abstreifer
- 38: Dichtring
- 39: Dichtring
- 40: Dichtring
- 41: Zackenring

## Patentansprüche

1. Selbsttätige Schmiereinrichtung an einer zu schmierenden Vorrichtung, z. B. an einem Bearbeitungswerkzeug, mit einem Pumpenelement (2) zur Förderung von Schmierstoff, z.B. Schmierfett, aus einem Vorratsbehälter (1) zu mindestens einer mit Schmierstoff zu versorgenden Schmierstelle der Vorrichtung, sowie mit Mitteln zum Erzeugen eines Pumpenhubes des Pumpenelements (2), wobei ein beim Betreiben der Vorrichtung beweglicher Teil, wie ein Arm, ein Hebel, ein Nocken oder ein Exzenter, mit dem Förderkolben (6) des Pumpenelements (2) zusammenwirkt, **gekennzeichnet durch** einen von dem beweglichen Teil der Vorrichtung betätigbaren Taster (4) mit einem axial hin und her verschiebbaren Stößel (7), welcher mittels eines Bowdenzugs (3) mit dem Förderkolben (6) des Pumpenelements (2) verbunden ist, wobei der Förderkolben (6) mittels Federkraft in Richtung seiner Druckposition und der Stößel (7) des Tasters (4) mittels Federkraft funktionell in entgegengesetzter Richtung zu der des Förderkolbens (6) vorgespannt sind und wobei die auf den Stößel (7) wirkende Federkraft größer ist als die auf den Förderkolben (6) wirkende Federkraft.

2. Schmiereinrichtung nach Anspruch 1, **dadurch gekennzeichnet, dass** der Förderkolben (6) unter der Wirkung einer z.B. als den Förderkolben (6) wenigstens teilweise umschließenden Schraubenlinienfeder ausgebildeten Druckfeder (9) in Richtung seiner Druckposition vorgespannt und der Stößel (7) unter der Wirkung einer z.B. als den Stößel (7) wenigstens teilweise umschließenden Schraubenlinienfeder ausgebildeten Rückstellfeder (8) bei Nichtbetätigung des Tasters (4) funktionell in Gegenrichtung, also in Richtung seiner Ansaugposition weg von dem Förderkolben (6) gedrückt und dadurch wegen der größeren Rückstellkraft der Rückstellfeder (8) gegenüber derjenigen der Druckfeder (9) der Förderkolben (6) in seine Ansaugstellung mitgenommen wird.

3. Schmiereinrichtung nach Anspruch 1 oder 2, **dadurch gekennzeichnet, dass** bei Betätigung des Tasters (4) durch Verschieben des Stößels (7) aus seiner Ansaugposition funktionell in Richtung des Förderkolbens (6) der Förderkolben (6) aus seiner Ansaugposition unter der Wirkung der Druckfeder (9) in Richtung seiner Druckposition verschoben wird.

4. Schmiereinrichtung nach einem der vorhergehenden Ansprüche, **dadurch gekennzeichnet, dass** ein den Bowdenzug (3) bildendes Seil (3') mit seinem einen Ende in einem zentrischen, z.B. als Sacklochbohrung ausgebildeten Einspannlängskanal (10) des Stößels (7) und mit seinem anderen Ende in einem zentrischen z.B. als Sacklochbohrung ausgebildeten Einspannlängskanal (11) des Förderkolbens (6) aufgenommenen und festgespannt ist.

5. Schmiereinrichtung nach einem der vorhergehenden Ansprüche, **dadurch gekennzeichnet, dass** die endgültige Ansaugposition des Stößels (7) durch einen z.B. von einem den Stößel (7) aufnehmenden Tastergehäuse (12) gebildeten Anschlag (13) bestimmt ist.

6. Schmiereinrichtung nach einem der vorhergehenden Ansprüche, **dadurch gekennzeichnet, dass** sich die Rückstellfeder (8) für den Stößel (7) an einem dem aus dem Tastergehäuse (12) herausragenden Stößelende (14) gegenüber liegenden Stößelende (25) an einem von einem Verschlussstopfen (15) des Tastergehäuses (12) gebildeten Gegenlager (15') abstützt.

7. Schmiereinrichtung nach einem der vorhergehenden Ansprüche, **dadurch gekennzeichnet, dass** das der Druckfeder (9) gegenüber liegende Förderkolbenende (16) in einem Führungskanal (17) eines Pumpenkörpers (22) abgedichtet geführt ist.

8. Schmiereinrichtung nach einem der vorhergehenden Ansprüche, **dadurch gekennzeichnet, dass** sowohl Ansaugöffnung (18) als auch Abgabeöffnung (19) des Pumpenkörpers (22) mit je einem Rückschlagventil (20, 21) versehen sind.

9. Schmiereinrichtung nach einem der vorhergehenden Ansprüche, **dadurch gekennzeichnet, dass** das den Bowdenzug (3) bildende Seil (3') durch einen ein Pumpengehäuse (23) auf der den Pumpenkörper (22) gegenüber liegenden Seite verschließenden und ein Gegenlager (24') für die Druckfeder (9) bildenden Verschlussstopfen (24) geführt ist.

## Claims

1. Automatic lubricating device located on a device which is to be lubricated, e. g. a machining device, with a pump element (2) for transporting lubricant, e. g. grease, from a storage reservoir (1) to at least one lubricating point on the device which requires lubricant, and with means to generate a pump stroke of the pump element (2), whereby an element of the device which is moveable during operation, such as an arm, a lever, a cam or an eccentric, interacts with the delivery piston (6) of the pump element (2), **characterized by** a button (4) which can be operated by the moveable element of the device and which has an axially movable plunger (7) connected to the delivery piston (6) of the pump element (2) by means of a Bowden wire (3), wherein the delivery piston (6) is pre-loaded in the direction of its compression position using spring force and the plunger (7) of the button (4) is functionally pre-loaded in the opposite direction from the delivery piston (6) using spring force and wherein the spring force acting on the plunger (7) is stronger than the spring force acting on the delivery piston (6).

2. Lubricating device according to claim 1, **characterized in that** the delivery piston (6), under the effect of a compression spring (9) being e. g. formed as a coil spring which at least partially encircles the delivery piston (6), is preloaded in the direction of its compression position, and when the button (4) is not operated, the plunger (7), under the effect of a return spring (8) being e. g. formed as a coil spring that at least partially encircles the plunger (7), is functionally pushed in the opposite direction, namely in the direction of its suction position away from the delivery piston (6), and thereby, due to the restoring force of the return spring (8) being stronger than the restoring force of the compression spring (9), carrying the delivery piston (6) to its suction position.

3. Lubricating device according to claim 1 or 2, **characterized in that** when the button (4) is operated, functionally moving the plunger (7) from its suction position in the direction of the delivery piston (6), the delivery piston (6) is moved from its suction position in the direction of its compression position under the effect of the compression spring (9).

4. Lubricating device according to any one of the preceding claims, **characterized in that** one end of the wire (3') forming the Bowden wire (3) is held and secured in a centric longitudinal load shaft (10) of the plunger (7), formed e.g. as a blind hole, and the other end is held and secured in a centric longitudinal load shaft (11) of the delivery piston (6), formed e.g. as a blind hole.

5. Lubricating device according to any one of the preceding claims, **characterized in that** the final suction position of the plunger (7) is determined by a stop position (13) which is formed e.g. by a push-button housing (12) which receives the plunger (7).

6. Lubricating device according to any one of the preceding claims, **characterized in that** the return spring (8) for the plunger (7) is supported by a counter bearing (15') formed by a sealing plug (15) of the push-button housing (12) at the plunger end (25) which is opposite the plunger end (14) protruding from the push-button housing (12).

7. Lubricating device according to any one of the preceding claims, **characterized in that** the end (16) of the delivery piston which is opposite the compression spring (9) is guided in a sealed fashion in a guide channel (17) of a pump body (22).

8. Lubricating device according to any one of the preceding claims, **characterized in that** the suction opening (18) and the discharge opening (19) of the pump body (22) are each provided with a check valve (20, 21).

9. Lubricating device according to any one of the preceding claims, **characterized in that** the wire (3') forming the Bowden wire (3) is guided through a sealing plug (24) which seals a pump housing (23) at the opposite side from the pump body (22) and which forms a counter support (24') for the compression spring (9).

## Revendications

1. Dispositif de lubrification sur un dispositif à lubrifier, par exemple sur un outil d'usinage, comprenant un élément à pompe (2) pour convoyer du lubrifiant, par exemple de la graisse lubrifiante, depuis un réservoir (1) vers au moins un point de graissage à alimenter en lubrifiant du dispositif, ainsi que des moyens de génération d'une course de pontes de l'élément à pompe (2), dans lequel une pièce mobile lors de l'utilisation du dispositif, comme un bras, un levier, une came ou un excentrique, coopère avec le piston de convoyage (6) de l'élément à pompe (2), **caractérisé par** une touche (4) actionnable par la pièce mobile du dispositif et comportant un poussoir déplaçable axialement en va et vient (7) qui est connecté au moyen d'un câble gainé (3) au piston de convoyage (6) de l'élément à pompe (2), le piston de convoyage (6) étant précontraint par force de ressort en direction de sa position de compression et le piston (7) de la touche (4) par force de ressort fonctionnellement dans le sens opposé à celui du piston de convoyage (6) et la force de ressort agissant sur le poussoir (7) étant supérieure à la force de ressort agissant sur le piston de convoyage (6).

2. Dispositif de lubrification selon la revendication 1, **caractérisé en ce que** le piston de convoyage (6) est précontraint sous l'action d'un ressort de compression (9) réalisé par exemple sous forme d'un ressort hélicoïdal entourant du moins partiellement le piston de convoyage (6) et le poussoir (7), sous l'action d'un ressort de rappel (8) réalisé par exemple sous la forme d'un ressort hélicoïdal entourant du moins partiellement le poussoir (7), en cas de non-actionnement de la touche (4), est poussé fonctionnellement en sens inverse, donc en direction de sa position d'aspiration en s'éloignant du piston de convoyage (6), et que le piston de convoyage (6) est ainsi entraîné dans sa position d'aspiration en raison de la force de rappel du ressort de rappel (8) supérieure à celle du ressort de compression (9).

3. Dispositif de lubrification selon la revendication 1 ou 2, **caractérisé en ce que**, en cas d'actionnement de la touche (4), par déplacement du poussoir (7) depuis sa position d'aspiration fonctionnellement en direction du piston de convoyage (6), le piston de convoyage (6) est déplacé de sa position d'aspiration sous l'action du ressort de compression (9) vers sa position de compression.

4. Dispositif de lubrification selon une des revendications précédentes, **caractérisé en ce qu'**un câble (3') formant le câble gainé (3) est reçu et serré par une de ses extrémités dans un canal longitudinal de serrage centré, (10), par exemple réalisé sous forme d'un trou borgne, du poussoir (7) et par son autre extrémité dans un canal de serrage longitudinal centré (11), réalisé par exemple sous forme d'un trou borgne, du piston de convoyage (6).

5. Dispositif de lubrification selon une des revendications précédentes, **caractérisé en ce que** la position d'aspiration définitive du poussoir (7) est déterminée par une butée (13) constituée par exemple par un boîtier de touche (12) recevant le poussoir (7).

6. Dispositif de lubrification selon une des revendications précédentes, **caractérisé en ce que** le ressort de rappel (8) pour le poussoir (7) s'appuie par une extrémité du poussoir (25) opposée à l'extrémité du poussoir (14) dépassant du boîtier de touche (12) au niveau d'un contre-palier (15') constitué par un bouchon d'obturation (15) du boîtier de touche (12).

7. Dispositif de lubrification selon une des revendications précédentes, **caractérisé en ce que** l'extrémité du piston de convoyage (16) opposée au ressort de compression (9) est guidée hermétiquement dans un canal de guidage (17) d'un corps de pompe (22).

8. Dispositif de lubrification selon une des revendications précédentes, **caractérisé en ce qu'**aussi bien l'ouverture d'aspiration (18) que l'ouverture de distribution (19) du corps de pompe (22) sont chacune pourvues d'une soupape antiretour (20, 21).

9. Dispositif de lubrification selon une des revendications précédentes, **caractérisé en ce que** le câble (3') constituant le câble gainé (3) est guidé par un bouchon d'obturation (24) fermant un boîtier de pompe (23) sur la face opposée au corps de pompe (22) et un bouchon d'obturation (24) constituant un contre-palier (24') pour le ressort de compression (9).
